# EUROPEAN PATENT SPECIFICATION

(11) **EP 3 743 186 B1**
(45) Date of publication and mention of the grant of the patent: **15.05.2024**
(21) Application number: 19744202.3
(22) Date of filing: 23.01.2019
(51) Int. Cl.: B01D 21/00, B01D 21/01, B09B 3/00, B09C 1/08, C02F 1/28, C02F 1/68, C02F 101/20, C02F 101/00, C04B 14/20, C04B 18/02, C04B 18/04, C04B 28/02, C04B 111/00

(54) **METHOD AND COMPOSITION FOR THE REMOVAL OF HEAVY METALS**
VERFAHREN UND ZUSAMMENSETZUNG ZUR ENTFERNUNG VON SCHWERMETALLEN
PROCEDE ET COMPOSITION PERMETTANT L'ÉLIMINATION DE MÉTAUX LOURDS

(30) Priority: 23.01.2018 US 201862620710 P
(43) Date of publication of application: 02.12.2020
(73) Proprietor: Georgia State University Research Foundation Inc., Atlanta, GA 30303 (US)
(72) Inventor: ELLIOTT, W. Crawford, Avondale Estates, Georgia 30002 (US); WAMPLER, J. Marion, Chamblee, Georgia 30341-1555 (US); KWONG-MOSES, Dominique S., Lilburn, Georgia 30047 (US)
(74) Representative: Barker Brettell LLP
(86) International application number: PCT/US2019/014742
(87) International publication number: WO 2019/147664

(56) References cited:
- KR-A- 20140 073 905
- KR-A- 20140 073 905
- US-A- 4 800 041
- US-A- 4 800 041
- US-A- 4 808 318
- US-A- 4 808 318
- "Phlogopite", Wikipedia, 16 December 2016 (2016-12-16), XP055628623, Retrieved from the Internet: URL:https://en.wikipedia.org/w/index.php?t itle=Phlogopite&oldid=755092887 [retrieved on 2019-03-18]
- "Muscovite", Wikipedia, 14 December 2016 (2016-12-14), XP055628626, Retrieved from the Internet: URL:https://en.wikipedia.org/w/index.php?t itle=Muscovite&oldid=754703927 [retrieved on 2019-03-18]

## Description

### FIELD OF THE INVENTION

The invention is directed to muscovite-enriched compositions with high affinity for heavy metal atoms. The muscovite-enriched compositions are useful for the sequestration of heavy metals.

### BACKGROUND

Aqueous solutions of radioactive waste have been found percolating through soils adjacent to sites where radioactive materials have been produced, for instance, in nuclear reactors. A large constituent of this aqueous radioactive waste is radiocesium, in which ¹³⁷Cs is the predominant isotope. Concern for the fate of ¹³⁷Cs stems fourfold from its high fission yield and moderately long half-life (30.17 years) and the high mobility and high biological availability of Cs in certain regolith environments.

Radiocesium has been introduced into the environment as a direct result of nuclear accidents, nuclear weapons testing, and other nuclear development activities. For example, at the Savannah River Site (Aiken, SC, USA), approximately 1900 curies of ¹³⁷Cs were released into the environment, as reported in 1991. Another locality of high radiocesium contamination is the area around the Fukushima Dai-ichi reactors (Fukushima Prefecture, Japan). Radiocesium and radioactive iodine were accidentally released from the Fukushima Dai-ichi reactors in 2011 in one of the largest accidental releases of radionuclides. Short-lived radioactive iodine decayed away within a matter of months, and ¹³⁴Cs has mostly decayed away; ¹³⁷Cs is by far the most abundant remaining radionuclide found in soils of Fukushima Prefecture and surrounding areas of Japan.

A method for removing cesium from the effluent in which cesium is dissolved using sericite (a potasisum-depleted muscovite) by adsorbing the cesium is known from document KR 2014 0073905 A.

There remains a need for methods of eliminating heaving metals from contaminated area, including soils and drinking waters. There remains a need for eliminating lead contamination from drinking water sources. There remains a need for methods of eliminating ¹³⁷Cs from contaminated areas. There remains a need for methods of safely sequestering ¹³⁷Cs over the lifetime of its radioactivity. The remains a need for limiting the spread of inadvertently released ¹³⁷Cs. There remains a need for building materials capable of sequestering radiocesium unintentionally released from a reactor source.

### SUMMARY

Disclosed herein are compositions and methods of sequestering heavy metals, including ¹³⁷Cs. In some instances, the compositions can be contacted with a contaminated area in order to remove the heavy metals, including ¹³⁷Cs. For instance, the composition can be admixed with contaminated soils and bodies of water. Contaminated waters can be passed through a sorption bed containing the composition enriched in potassium-depleted muscovite. Also disclosed here are concretes and other building materials that include a potassium-depleted muscovite. The building materials may be advantageously deployed in the construction of structures intended to house nuclear reactors and other sources of radiocesium and radioactive heavy metals.

The details of one or more embodiments are set forth in the descriptions below. Other features, objects, and advantages will be apparent from the description and from the claims.

### BRIEF DESCRIPTION OF THE FIGURES

Figure 1 depicts an X-ray diffraction pattern for a randomly oriented portion of a powdered sample of the mineral composition enriched in potassium-depleted muscovite. M: muscovite, K: kaolin group minerals, Q: quartz.
Figure 2 depicts an X-ray diffraction pattern for an air-dried, oriented mount of part of a very finely powdered sample of the mineral composition enriched in potassium-depleted muscovite. (M for muscovite, Q for quartz, K for kaolinite.)
Figure 3 depicts an X-ray diffraction pattern for an ethylene glycol-solvated, oriented mount of another part of the very finely powdered sample.
Figure 4 depicts the concentration of solid phase Cs in units of mol/kg against the concentration of aqueous phase Cs in units of mol/L for the three sampling events (18 hours, 60 days and 130 days).
Figure 5 depicts the K_{d} value for each batch sample test suspension plotted against the initial concentration of Cs in the corresponding test suspension.
Figure 6 depicts the desorption K_{d} values in units of L/kg against the initial concentration of Cs in mol/L.

### DETAILED DESCRIPTION

The invention relates to a method for sequestering heavy metal atoms from a contaminated area in accordance with claim 1 and a building material comprising a muscovite-enriched mineral composition in accordance with claim 10.

Dependent claims refer to preferred embodiments of the invention.

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes¬ from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers, or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutations of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

Disclosed herein are compositions and methods for sequestering heavy metals, for instance Cs, Rb, Ba, Sr, and Pb. In some cases, the Cs is ¹³⁷Cs. In some embodiments, a composition including a muscovite-enriched mineral composition is contacted with an area contaminated with one or more heavy metals, including ¹³⁷Cs. In some embodiments, a muscovite-enriched mineral composition is included in a building material, for instance a concrete mix. The muscovite is potassium-depleted muscovite containing no more than 10%, no more than 9%, no more than 8%, no more than 7%, no more than 6%, no more than 5%, or no more than 4% by mass of potassium relative to the total mass of the muscovite. Potassium content can be determined and reported as mass fraction K₂O using conventional elemental analysis.

Although the mineral composition may contain other phyllosilicates and other minerals, it is preferred the mineral composition contains muscovite in an amount that is at least 60%, at least 65%, at least 70%, at least 75%, at least 80%, at least 85%, at least 90%, or at least 95% by mass relative to the total mass of the mineral composition. Muscovite content may be assessed using X-ray diffraction and PANalytical's HighScore Semi-Quantitative Analysis. Other components that are present in the composition include kaolin minerals and quartz.

The mineral compositions useful for the sequestration of radiocesium may be characterized by the particle sizes of the minerals. For instance, the mineral composition can have an overall particle size distribution in which D₁₀ (the value of particle size exceeded by 90% of the composition, by mass) will be at least 5 µm, at least 10 µm, at least 15 µm, at least 20 µm, at least 25 µm, at least 30 µm, at least 40 µm, at least 50 µm, at least 75 µm, or at least 100 µm. In some instances, the mineral composition can have a particle size distribution in which D₁₀ (the value of particle size exceeded by 90% of the muscovite, by mass) will be at least 5 µm, at least 10 µm, at least 15 µm, at least 20 µm, at least 25 µm, at least 30 µm, at least 40 µm, at least 50 µm, at least 75 µm, or at least 100 µm.

In some embodiments, the mineral composition can have an overall particle size distribution in which D₉₀ (the value of particle size exceeded by 10% of the composition, by mass) will be no more than 2,000 µm, no more than 1,500 µm, no more than 1,250 µm, no more than 1,000 µm, no more than 900 µm, no more than 800 µm, no more than 700 µm, no more than 600 µm, or no more than 500 µm. In some embodiments, the muscovite can have a particle size distribution in which D₉₀ (the value of particle size exceeded by 10% of the muscovite, by mass) will be no more than 2,000 µm, no more than 1,500 µm, no more than 1,250 µm, no more than 1,000 µm, no more than 900 µm, no more than 800 µm, no more than 700 µm, no more than 600 µm, or no more than 500 µm.

The compositions disclosed herein have high affinity for cesium atoms (as monovalent cations). The affinity may be assessed by K_{d}([Cs]_{solid}/[Cs]_{aqueous}), as measured at a total electrolyte content of 1 mmol/L, that is greater than 1,000 L/kg, greater than 1,200 L/kg, greater than 1,400 L/kg, greater than 1,600 L/kg, greater than 1,800 L/kg, or greater than 2,000 L/kg. High affinities for other heavy metals, including Pb, Ba, Sr, and Rb, can also be observed.

The compositions disclosed herein may be used to sequester and remove cesium from areas contaminated with high concentrations of ¹³⁷Cs. For instance, the compositions can remove cesium from a contaminated area that can include ¹³⁷Cs in an amount of at least 500 kBq/m², at least 750 kBq/m², at least 1000 kBq/m², at least 1,250 kBq/m², at least 1,500 kBq/m², at least 2,000 kBq/m², at least 2,500 kBq/m², or at least 3,000 kBq/m².

Heavy metals, including radiocesium can be sequestered within or removed from contaminated soils and water bodies. In some embodiments, the compositions can simply be blended into the contaminated soil. Over time, the heavy metals will aggregate in the potassium-depleted muscovite, thereby effectively immobilizing it. In other embodiments, the compositions can be contacted with contaminated soils and waters for a time sufficient to sequester the heavy metal, for instance radiocesium, after which time the compositions can be removed and safely stored. The compositions can be placed within a permeable container and then buried in contaminated soils or submerged in contaminated waters. In other embodiments, a fixed bed device can be employed, in which contaminated water is passed through a tube containing the potassium-depleted muscovite. The water can be pumped or be fed through the tube under the force of gravity.

A second aspect of the present invention relates to building materials including a muscovite-enriched mineral composition, as described above. Exemplary building compositions include concretes including a muscovite-enriched mineral composition. For instance, the muscovite-enriched mineral composition is present in a dry concrete mix in an amount from 0.1-20% by weight, from 0.5-20% by weight, from 1-20% by weight, from 2.5-20% by weight, from 5-20% by weight, from 7.5-20% by weight, from 10-20% by weight, from 15-20% by weight, from 10-15% by weight, from 5-10% by weight, from 0.5-5% by weight, from 0.5-2.5% by weight, or from 1-5% by weight. In some instances, the muscovite-enriched mineral composition is present in an amount no more than 20% by weight, no more than 15% by weight, no more than 12.5% by weight, no more than 10% by weight, no more than 7.5% by weight, no more than 5% by weight, no more than 2.5% by weight, or no more than 1% by weight.

In some aspects of the invention, the muscovite-enriched mineral composition is combined with a cement, sand, and aggregate to give a concrete mix. A preferred cement is Portland cement. Exemplary weight ratio combinations are presented in the following table:

| Cement | Sand | Aggregate | Muscovite-enriched mineral composition |
|---|---|---|---|
| 1 | 0.25-5 | 0.5-10 | 0.25-10 |
| 1 | 0.25-1 | 0.5-2 | 0.25-2 |
| 1 | 3-5 | 6-10 | 0.25-2 |
| 1 | 2 | 4 | 0.25-1.5 |
| 1 | 1-2 | 2-4 | 0.25-1.5 |
| 1 | 2-3 | 4-6 | 0.25-1.5 |
| 1 | 3-4 | 6-8 | 0.25-1.5 |
| 1 | 0.25-1 | 0.5-2 | 0.05-0.25 |
| 1 | 3-5 | 6-10 | 0.05-0.25 |
| 1 | 2 | 4 | 0.05-0.25 |
| 1 | 1-2 | 2-4 | 0.05-0.25 |
| 1 | 2-3 | 4-6 | 0.05-0.25 |
| 1 | 3-4 | 6-8 | 0.05-0.25 |

### EXAMPLES

The following examples are for the purpose of illustration of the invention.

A sample of a potassium-depleted muscovite-enriched mineral composition was obtained from the Georgia kaolin deposits, separated from mined kaolin by Southeast Performance Minerals. The bulk sample had the following particle size distribution:

**Table 1. Particle size distribution from sieving**

| Sieve size (U.S. Standard) | **Sieve size (mm)** | **Particle size range (mm)** | **Mass (g)** | **Mass Fraction (%)** |
|---|---|---|---|---|
| No. 10 | 2.00 | > 2.00 | 0 | 0 |
| No. 20 | 0.841 | 0.841-2.00 | 0 | 0 |
| No. 60 | 0.250 | 0.250-0.84 | 0.04 | 8 |
| No. 325 | 0.044 | 0.044-0.250 | 0.38 | 79 |
| Pan | | > 0.044 | 0.06 | 13 |

A small fraction (8% by mass) of the bulk sample consists of particles that have diameters between 0.25 mm and 0.84 mm. Most (79% by mass) of the bulk sample consists of particles between 0.044 mm and 0.25 mm in diameter, and 13% (by mass) of the bulk sample consists of particles smaller than 0.044 mm in diameter.

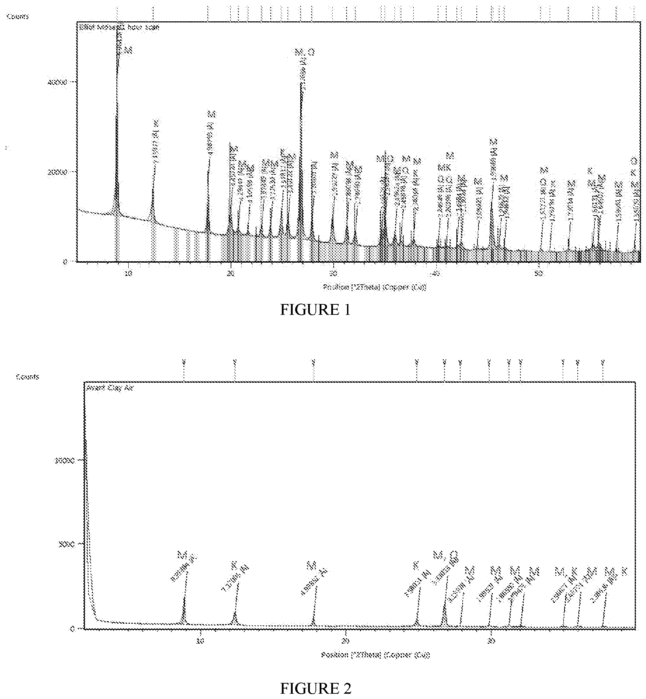

The X-ray diffraction pattern for a randomly oriented powdered portion of the bulk sample is shown in Figure 1. This test material is composed of muscovite, kaolin group minerals, and quartz. The semi-quantitative abundances of these minerals were determined as: 76% muscovite, 21 % kaolin group, and 3% quartz per phase determination using PANalytical's HighScore Semi-Quantitative Analyses.

Each value of interlayer spacing (*d*-value) in Figure 1 is paired with the single letter abbreviation for the mineral identity with which it corresponds, as determined via comparison against reference *d*-values. M- muscovite, K-kaolin group minerals (kaolinite), q-quartz.

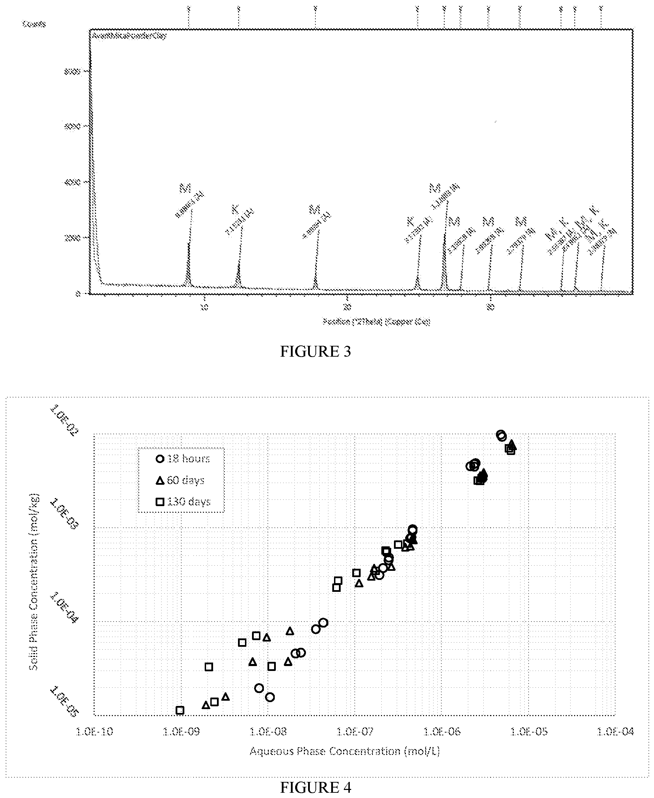

Diffraction patterns of parts of a very finely powdered portion of the bulk sample, prepared as oriented mounts on glass petrographic slides, are shown in Figures 2 and 3. Muscovite and kaolin group minerals are the predominant minerals seen in the very fine materials. One of these oriented mounts was solvated with ethylene glycol to test for the presence of smectite, interlayer clays, and vermiculite via comparison against the other, air-dried, oriented mount. No difference between the air-dried (Figure 2) and ethylene glycol-solvated (Figure 3) materials was observed.

**Table 2: Annotated d-values from a randomly oriented powder sample diffraction scan.**

| ***d-*value (Å)** | **Mineral** |
|---|---|
| 9.96 | Muscovite |
| 7.16 | Kaolinite |
| 4.99 | Muscovite |
| 4.46 | Muscovite, Kaolinite |
| 4.29 | Muscovite, Quartz |
| 4.11 | Muscovite |
| 3.87 | Muscovite |
| 3.74 | Muscovite |
| 3.58 | Kaolinite |
| 3.49 | Muscovite |
| 3.33 | Muscovite, Quartz |
| 3.20 | K-spar? |
| 2.99 | Muscovite |
| 2.86 | Muscovite |
| 2.79 | Muscovite |
| 2.59 | Muscovite, Kaolinite |
| 2.50 | Muscovite, Kaolinite |
| 2.50 | Muscovite |
| 2.46 | Muscovite, Quartz |
| 2.38 | Muscovite, Kaolinite |
| 2.25 | Muscovite, Quartz |
| 2.20 | Muscovite, Kaolinite |
| 2.15 | Muscovite |
| 2.13 | Muscovite, Quartz |
| 2.06 | Muscovite |
| 1.997 | Muscovite, Kaolinite, Quartz |
| 1.966 | Muscovite |
| 1.95 | Muscovite |
| 1.82 | Muscovite, Quartz |
| 1.79 | Kaolinite |
| 1.73 | Muscovite |
| 1.66 | Muscovite, Kaolinite |
| 1.65 | Muscovite |
| 1.60 | Muscovite |
| 1.56 | Muscovite, Kaolinite, Quartz |

**Table 3. Annotated d-values from the air-dried, oriented clay mount diffraction scan.**

| ***d*-value (Å)** | **Mineral** |
|---|---|
| 10.00 | Muscovite |
| 7.17 | Kaolinite |
| 5.00 | Muscovite |
| 3.58 | Kaolinite |
| 3.33 | Muscovite, Quartz |
| 3.20 | Muscovite |
| 3.00 | Muscovite |
| 2.87 | Muscovite |
| 2.80 | Muscovite |
| 2.57 | Muscovite, Kaolinite |
| 2.50 | Muscovite |
| 2.39 | Muscovite, Kaolinite |

**Table 4. Annotated d-values from the glycol-solvated, oriented clay mount diffraction scan.**

| ***d-*value (Å)** | **Mineral** |
|---|---|
| 9.98 | Muscovite |
| 7.15 | Kaolinite |
| 4.99 | Muscovite |
| 3.57 | Kaolinite |
| 3.33 | Muscovite |
| 3.20 | Muscovite |
| 2.99 | Muscovite |
| 2.80 | Muscovite |
| 2.57 | Muscovite, Kaolinite |
| 2.50 | Muscovite, Kaolinite |
| 2.39 | Muscovite, Kaolinite |

With respect to experimentally determined *d*-values, the HighScore software indicated that the mineral dickite is a better match than kaolinite; however, based on the sample's original locality, the sample deductively contains kaolinite. The most intense diffraction peaks corresponding exclusively to nacrite (2.41Å) and dickite (2.32Å) were not observed. Kaolinite is the prevalent kaolin group mineral in the sample. Since the *d*-values remained unchanged in the ethylene glycol-solvated mount, the sample is unlikely to contain a significant fraction of smectite. This solvation demonstrated also that kaolinite-smectite interstratified minerals were not present in this sample. An evident asymmetric peak on the high d-value side of the 001 peak for kaolinite was not observed. Kaolinite is not interstratified with other phyllosilicate minerals (muscovite) in the sample.

The mass fractions of major element oxides in the muscovite-enriched mineral composition (as received and split) are shown in the central column of Table 5 (below) as percent by mass of corresponding oxides. The sum of the major element oxides including loss on ignition (LOI) is 99.22%. The chemical composition of the muscovite alone was calculated by correction for the 21% of kaolinite and the 3% of quartz in the sample, as determined by X-ray diffraction. The K₂O content of the muscovite (9.98%) is less than that of pure muscovite (11.81 wt. %), which demonstrates that the muscovite is potassium-depleted.

**Table 5. Results of major-element analysis of the muscovite-enriched mineral composition and the calculated chemical composition of the muscovite alone**

| **Oxide** | **Mass fraction (%)** | Muscovite alone (%) |
|---|---|---|
| Na₂O | 0.52 | 45.20 |
| K₂O | 7.51 | 34.49 |
| SiO₂ | 46.78 | 2.09 |
| Al₂O₃ | 34.24 | 0.73 |
| Fe₂O₃ | 1.57 | 1.17 |
| MgO | 0.55 | 0.02 |
| TiO₂ | 0.88 | 0.03 |
| CaO | 0.02 | 9.98 |
| MnO | 0.014 | 0.69 |
| P₂O₅ | 0.03 | 5.56 |
| LOI | 7.11 | 0.04 |
| Total | 99.22 | 100.00 |

The sorption of radioactive cesium (¹³⁷Cs) from aqueous solution onto the muscovite-enriched mineral composition was observed in 20 test suspensions (each a 0.1 g test portion of the sample in 10 mL of liquid) containing variable amounts of added stable cesium (¹³³Cs). The activity of radioactive cesium remaining in the liquid phase after 18 hours, 60 days, and 130 days of tumbling was determined by liquid scintillation counting (LSC). The liquid phase ¹³⁷Cs activity concentration was obtained directly from LSC measurement. Solid phase ¹³⁷Cs activity was calculated from the difference between the quantity of added ¹³⁷Cs and that of ¹³⁷Cs remaining in the aqueous phase.

Tables 6a, 6b, and 6c (below) present the aqueous and solid phase concentrations of Cs as calculated from the LSC data for the three sampling events (18 hours, 60 days, and 130 days, respectively). Tables 6a, 6b, and 6c also include the K_{d} values for each batch sorption test suspension at 18 hours, 60 days, and 130 days and the concentration of total Cs in each batch sorption test suspension. No data are shown for two additional test suspensions, which were blanks to which no ¹³⁷Cs and no ¹³³Cs were added.

**Table 6a: Results for batch sorption experimentation as calculated from LSC data after 18 hours of tumbling**

| Sample ID | [Cs]_{aq} (mol/L) | [Cs]_{solid} (mol/kg) | Total [Cs] (mol/L) | K_{d} (L/kg) |
|---|---|---|---|---|
| 1a | 1.06 × 10⁻⁸ | 1.57 × 10⁻⁵ | 2.2 × 10⁻⁷ | 1.49 × 10³ |
| 2a | 2.39 × 10⁻⁸ | 4.66 × 10⁻⁵ | 5.0 × 10⁻⁷ | 1.95 × 10³ |
| 3a | 4.36 × 10⁻⁸ | 9.72 × 10⁻⁵ | 1.0 × 10⁻⁶ | 2.23 × 10³ |
| 4a | 2.43 × 10⁻⁷ | 4.52 × 10⁻⁴ | 5.0 × 10⁻⁶ | 1.86 × 10³ |
| 5a | 4.59 × 10⁻⁷ | 9.32 × 10⁻⁴ | 1.0 × 10⁻⁵ | 2.03 × 10³ |
| 6a | 2.15 × 10⁻⁶ | 4.55 × 10³ | 5.0 × 10⁻⁵ | 2.11 × 10³ |
| 7a | 4.92 × 10⁻⁶ | 9.36 × 10³ | 1.0 × 10⁻⁴ | 1.90 × 10³ |
| 8a | 1.91 × 10⁻⁷ | 3.14 × 10⁻⁴ | 5.0 × 10⁻⁶ | 1.64 × 10³ |
| 9a | 4.60 × 10⁻⁷ | 9.65 × 10⁻⁴ | 1.0 × 10⁻⁵ | 2.10 × 10³ |
| 10a | 2.38 × 10⁻⁶ | 4.81 × 10³ | 5.0 × 10⁻⁵ | 2.02 × 10³ |
| 1b | 7.90 × 10⁻⁹ | 1.96 × 10⁻⁵ | 2.2 × 10⁻⁷ | 2.48 × 10³ |
| 2b | 2.08 × 10⁻⁸ | 4.56 × 10⁻⁵ | 5.0 × 10⁻⁷ | 2.20 × 10³ |
| 3b | 3.57 × 10⁻⁸ | 8.30 × 10⁻⁵ | 1.0 × 10⁻⁶ | 2.33 × 10³ |
| 4b | 2.10 × 10⁻⁷ | 3.72 × 10⁻⁴ | 5.0 × 10⁻⁶ | 1.77 × 10³ |
| 5b | 4.46 × 10⁻⁷ | 7.97 × 10⁻⁴ | 1.0 × 10⁻⁵ | 1.79 × 10³ |
| 6b | 2.46 × 10⁻⁶ | 4.91 × 10³ | 5.0 × 10⁻⁵ | 1.99 × 10³ |
| 7b | 4.76 × 10⁻⁶ | 9.90 × 10³ | 1.0 × 10⁻⁴ | 2.08 × 10³ |
| 8b | 2.46 × 10⁻⁷ | 4.82 × 10⁻⁴ | 5.0 × 10⁻⁶ | 1.96 × 10³ |
| 9b | 4.29 × 10⁻⁷ | 7.76 × 10⁻⁴ | 1.0 × 10⁻⁵ | 1.81 × 10³ |
| 10b | 2.38 × 10⁻⁶ | 4.50 × 10³ | 5.0 × 10⁻⁵ | 1.89 × 10³ |

**Table 6b: Results for batch sorption experimentation as calculated from LSC data after 60 days of tumbling**

| Sample ID | [Cs]_{aq} (mol/L) | [Cs]_{solid} (mol/kg) | Total [Cs] (mol/L) | K_{d} (L/kg) |
|---|---|---|---|---|
| 1a | 1.93 × 10⁻⁹ | 1.30 × 10⁻⁵ | 2.2 × 10⁻⁷ | 6.74 × 10³ |
| 2a | 1.70 × 10⁻⁸ | 3.77 × 10⁻⁵ | 5.0 × 10⁻⁷ | 2.22 × 10³ |
| 3a | 1.78 × 10⁻⁸ | 7.99 × 10⁻⁵ | 1.0 × 10⁻⁶ | 4.48 × 10³ |
| 4a | 1.66 × 10⁻⁷ | 3.71 × 10⁻⁴ | 5.0 × 10⁻⁶ | 2.23 × 10³ |
| 5a | 4.69 × 10⁻⁷ | 7.44 × 10⁻⁴ | 1.0 × 10⁻⁵ | 1.59 × 10³ |
| 6a | 2.79 × 10⁻⁶ | 3.62 × 10³ | 5.0 × 10⁻⁵ | 1.30 × 10³ |
| 7a | 6.50 × 10⁻⁶ | 7.51 × 10³ | 1.0 × 10⁻⁴ | 1.16 × 10³ |
| 8a | 1.11 × 10⁻⁷ | 2.58 × 10⁻⁴ | 5.0 × 10⁻⁶ | 2.32 × 10³ |
| 9a | 4.55 × 10⁻⁷ | 7.72 × 10⁻⁴ | 1.0 × 10⁻⁵ | 1.69 × 10³ |
| 10a | 3.05 × 10⁻⁶ | 3.83 × 10³ | 5.0 × 10⁻⁵ | 1.25 × 10³ |
| 1b | 3.24 × 10⁻⁹ | 1.60 × 10⁻⁵ | 2.2 × 10⁻⁷ | 4.93 × 10³ |
| 2b | 6.65 × 10⁻⁹ | 3.75 × 10⁻⁵ | 5.0 × 10⁻⁷ | 5.63 × 10³ |
| 3b | 9.64 × 10⁻⁹ | 6.81 × 10⁻⁵ | 1.0 × 10⁻⁶ | 7.06 × 10³ |
| 4b | 1.54 × 10⁻⁷ | 3.05 × 10⁻⁴ | 5.0 × 10⁻⁶ | 1.97 × 10³ |
| 5b | 4.33 × 10⁻⁷ | 6.39 × 10⁻⁴ | 1.0 × 10⁻⁵ | 1.48 × 10³ |
| 6b | 3.04 × 10⁻⁶ | 3.92 × 10³ | 5.0 × 10⁻⁵ | 1.29 × 10³ |
| 7b | 6.32 × 10⁻⁶ | 7.95 × 10³ | 1.0 × 10⁻⁴ | 1.26 × 10³ |
| 8b | 2.62 × 10⁻⁷ | 3.88 × 10⁻⁴ | 5.0 × 10⁻⁶ | 1.48 × 10³ |
| 9b | 3.79 × 10⁻⁷ | 6.23 × 10⁻⁴ | 1.0 × 10⁻⁵ | 1.64 × 10³ |
| 10b | 3.02 × 10⁻⁶ | 3.58 × 10³ | 5.0 × 10⁻⁵ | 1.19 × 10³ |

**Table 6c: Results for batch sorption experimentation as calculated from LSC data after 130 days of tumbling**

| Sample ID | [Cs]_{aq} (mol/L) | [Cs]_{solid} (mol/kg) | Total [Cs] (mol/L) | K_{d} (L/kg) |
|---|---|---|---|---|
| 1a | 9.63 × 10⁻¹⁰ | 1.14 × 10⁻⁵ | 2.2 × 10⁻⁷ | 1.18 × 10⁴ |
| 2a | 1.10 × 10⁻⁸ | 3.34 × 10⁻⁵ | 5.0 × 10⁻⁷ | 3.03 × 10³ |
| 3a | 7.34 × 10⁻⁹ | 7.06 × 10⁻⁵ | 1.0 × 10⁻⁶ | 9.61 × 10³ |
| 4a | 1.04 × 10⁻⁷ | 3.31 × 10⁻⁴ | 5.0 × 10⁻⁶ | 3.18 × 10³ |
| 5a | 3.15 × 10⁻⁷ | 3.31 × 10⁻⁴ | 1.0 × 10⁻⁵ | 2.10 × 10³ |
| 6a | 2.61 × 10⁻⁶ | 3.20 × 10³ | 5.0 × 10⁻⁵ | 1.23 × 10³ |
| 7a | 6.21 × 10⁻⁶ | 6.68 × 10³ | 1.0 × 10⁴ | 1.07 × 10³ |
| 8a | 6.13 × 10⁻⁸ | 3.31 × 10⁻⁴ | 5.0 × 10⁻⁶ | 3.74 × 10³ |
| 9a | 4.01 × 10⁻⁷ | 6.78 × 10⁻⁴ | 1.0 × 10⁻⁵ | 1.69 × 10³ |
| 10a | 2.89 × 10⁻⁶ | 3.38 × 10³ | 5.0 × 10⁻⁵ | 1.17 × 10³ |
| 1b | 2.42 × 10⁻⁹ | 1.40 × 10⁻⁵ | 2.2 × 10⁻⁷ | 5.79 × 10³ |
| 2b | 2.08 × 10⁻⁹ | 3.31 × 10⁻⁵ | 5.0 × 10⁻⁷ | 1.59 × 10⁴ |
| 3b | 5.06 × 10⁻⁹ | 5.98 × 10⁻⁵ | 1.0 × 10⁻⁶ | 1.18 × 10⁴ |
| 4b | 6.40 × 10⁻⁸ | 2.74 × 10⁻⁴ | 5.0 × 10⁻⁶ | 4.28 × 10³ |
| 5b | 2.25 × 10⁻⁷ | 5.71 × 10⁻⁴ | 1.0 × 10⁻⁵ | 2.53 × 10³ |
| 6b | 2.96 × 10⁻⁶ | 3.46 × 10³ | 5.0 × 10⁻⁵ | 1.17 × 10³ |
| 7b | 5.89 × 10⁻⁶ | 7.08 × 10³ | 1.0 × 10⁴ | 1.20 × 10³ |
| 8b | 1.73 × 10⁻⁷ | 3.47 × 10⁻⁴ | 5.0 × 10⁻⁶ | 2.01 × 10³ |
| 9b | 2.32 × 10⁻⁷ | 5.53 × 10⁻⁴ | 1.0 × 10⁻⁵ | 2.38 × 10³ |
| 10b | 2.78 × 10⁻⁶ | 3.17 × 10³ | 5.0 × 10⁻⁵ | 1.14 × 10³ |

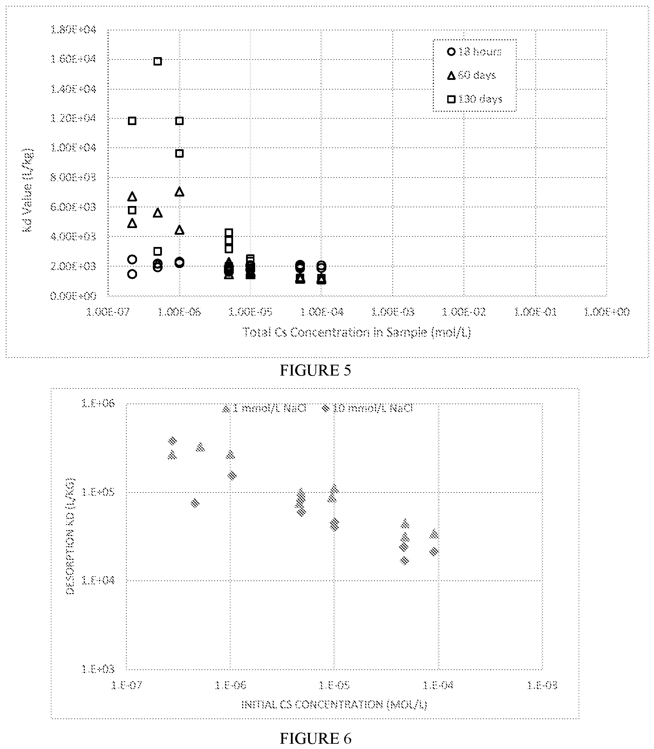

Figure 4 plots the concentration of solid phase Cs in mol/kg against the concentration of aqueous phase Cs in mol/L for the three sampling events (18 hours, 60 days, and 130 days). In Figure 5, the K_{d} value for each batch test suspension is plotted against the concentration of total Cs in the corresponding test suspension. The K_{d} values for the suspensions with smaller total Cs concentrations increased with time, resulting in an inverse relation between K_{d} and the concentration of total Cs after 60 days and a stronger inverse relationship after 130 days.

Following 130 days of batch sorption experimentation, desorption test suspensions were created by centrifuging each suspension, decanting the supernatant liquid, and replacing the supernatant liquid with a solution of NaCl (10 mM NaCl for 1a-10a; 1 mM NaCl for 1b-10b) to introduce Na⁺ as a counterion. These desorption test suspensions were tumbled for 60 days, then centrifuged and sampled to yield the following data.

**Table 7a: Results from desorption into 10 mM NaCl after 60 days**

| **Sample ID** | **[¹³⁷Cs]_{solid} (dpm/g)** | **[¹³⁷Cs]_{aq} (dpm/mL)** | **Fraction Desorbed (%)** | **Desorption K_{d} (L/kg)** |
|---|---|---|---|---|
| 1a | 2.47 × 10⁶ | 6 | 0.02 | 3.8 × 10⁵ |
| 2a | 3.16 × 10⁶ | 42 | 0.13 | 7.6 × 10⁴ |
| 3a | 3.31 × 10⁶ | 22 | 0.07 | 1.5 × 10⁵ |
| 4a | 2.94 × 10⁶ | 36 | 0.11 | 8.1 × 10⁴ |
| 5a | 3.15 × 10⁶ | 78 | 0.25 | 4.0 × 10⁴ |
| 6a | 2.91 × 10⁶ | 122 | 0.39 | 2.4 × 10⁴ |
| 7a | 2.86 × 10⁶ | 134 | 0.43 | 2.1 × 10⁴ |
| 8a | 2.03 × 10⁶ | 34 | 0.11 | 5.9 × 10⁴ |
| 9a | 3.22 × 10⁶ | 71 | 0.22 | 4.5 × 10⁴ |
| 10a | 3.07 × 10⁶ | 184 | 0.58 | 1.7 × 10⁴ |

**Table 7b: Results from desorption into 1 mM NaCl after 60 days**

| **Sample ID** | **[¹³⁷Cs]_{solid} (dpm/g)** | **[¹³⁷Cs]_{aq} (dpm/mL)** | **Fraction Desorbed (%)** | **Measured Desorption K_{d} (L/kg)** |
|---|---|---|---|---|
| 1b | 3.05 × 10⁶ | 11 | 0.04 | 2.7 × 10⁵ |
| 2b | 3.12 × 10⁶ | 9 | 0.03 | 3.3 × 10⁵ |
| 3b | 2.83 × 10⁶ | 11 | 0.03 | 2.7 × 10⁵ |
| 4b | 2.44 × 10⁶ | 25 | 0.08 | 9.9 × 10⁴ |
| 5b | 2.70 × 10⁶ | 24 | 0.08 | 1.1 × 10⁵ |
| 6b | 3.12 × 10⁶ | 71 | 0.22 | 4.4 × 10⁴ |
| 7b | 3.04 × 10⁶ | 89 | 0.28 | 3.4 × 10⁴ |
| 8b | 3.13 × 10⁶ | 42 | 0.13 | 7.5 × 10⁴ |
| 9b | 2.59 × 10⁶ | 29 | 0.09 | 8.8 × 10⁴ |
| 10b | 2.90 × 10⁶ | 92 | 0.29 | 3.1 × 10⁴ |

Tables 7a and 7b present data collected after 60 days of desorption for test suspensions containing 10 mM NaCl and 1 mM NaCl, respectively. The activity concentrations of ¹³⁷Cs in the aqueous phase were measured directly by LSC. The activity of ¹³⁷Cs in the solid phase was calculated as the difference between the activity of ¹³⁷Cs on the solid at the start of the desorption period and the measured activity of aqueous ¹³⁷Cs. The fraction of ¹³⁷Cs desorbed from the mica, a measure of the reversibility of the sorption reaction, was found by subtracting from unity the ratio of ¹³⁷Cs activity on the solid at the sampling time (t) to the ¹³⁷Cs activity on the solid at the start of the desorption process.

Figure 6 plots the desorption K_{d} in L/kg against the concentration of total Cs in mol/L. The data are presented on logarithmic scales, allowing for differentiation of the two groups of batch desorption test suspensions-one group containing 10 mM NaCl; the other containing 1 mM NaCl. Two different concentrations (1 mM and 10 mM) of NaCl were used in the batch desorption experiment to examine the effect of counterion concentration on desorption behavior. That the K_{d} values are consistently smaller for the 10 mM NaCl test portions than for the 1 mM NaCl test portions is due to mass action. A larger concentration of competing sodium cations leads to more desorption of the cesium cations that had been bound to the mica. Overall, K_{d} values derived for desorption are very large, meaning that very little ¹³⁷Cs was desorbed from the mica. Large K_{d} values support practical industrial application for the muscovite.

## Claims

1. A method for sequestering heavy metal atoms from a contaminated area, comprising contacting the contaminated area with a muscovite-enriched mineral composition, wherein the muscovite comprises potassium in an amount no more than 10% by mass of potassium relative to the total mass of the muscovite,
**characterized in that** the muscovite-enriched composition further comprises quartz and kaolin group mineral.

2. The method according to claim 1, wherein the muscovite-enriched mineral composition comprises muscovite in an amount at least 60% by mass relative to the total mass of the muscovite-enriched mineral.

3. The method according to any of claims 1-2, wherein the muscovite-enriched mineral has a particle size D₁₀ that is at least greater than 5 µm.

4. The method according to any of claims 1-3, wherein the muscovite-enriched mineral has a particle size D₉₀ that is no more than 2,000 µm.

5. The method according to any of claims 1-4, wherein the muscovite-enriched mineral absorbs cesium with a K_{d}([Cs]_{solid}/[Cs]_{aqueous}) that is greater than 1,000 L/kg.

6. The method according to any of claims 1-5, wherein the heavy metal atoms comprise Cs, Pb, Sr, Rb, Ba, or a mixture thereof.

7. The method according to any of claims 1-6, wherein the heavy metal atoms comprise ¹³⁷Cs.

8. The method according to any of claims 1-7, wherein the contaminated area comprises ¹³⁷Cs in an amount of at least 500 kBq/m².

9. The method according to any of claims 1-8, comprising contacting the contaminated area with a permeable container comprising the muscovite-enriched mineral composition.

10. A building material comprising a muscovite-enriched mineral composition, wherein the muscovite comprises potassium in an amount no more than 10% by mass of potassium relative to the total mass of the muscovite,
**characterized in that** the muscovite-enriched composition further comprises quartz and kaolin group mineral.

11. The method according to any of claims 1-9 or the building material according to claim 10, wherein the kaolin group mineral comprises kaolinite.

12. The method according to any of claims 1-9 or 11, or the building material according to claim 10 or claim 11, wherein the potassium-depleted muscovite comprises potassium in an amount no more than 8% by mass of potassium relative to the total mass of the muscovite.

13. The building material according to any of claims 10-12, wherein the muscovite-enriched mineral composition comprises muscovite in an amount at least 60% by mass relative to the total mass of the muscovite-enriched mineral.

14. The building material according to any of claims 10-13, wherein the building material comprises the muscovite-enriched mineral composition in an amount no more than 20% by weight relative to the total weight of the building material.

15. The building material according to any of claims 10-14, wherein the building material is a concrete mix further comprising cement, sand, and aggregate.

## Patentansprüche

1. Verfahren zum Entfernen von Schwermetallatomen aus einem kontaminierten Bereich, umfassend Inkontaktbringen des kontaminierten Bereichs mit einer Muskovit-angereicherten Mineralzusammensetzung, wobei der Muskovit Kalium in einer Menge von nicht mehr als 10 Masse-% Kalium bezogen auf die Gesamtmasse des Muskovits umfasst,
**dadurch gekennzeichnet, dass** die Muskovit-angereicherte Zusammensetzung ferner Quarz- und Kaolingruppen-Mineral umfasst.

2. Verfahren gemäß Anspruch 1, wobei die Muskovit-angereicherte Mineralzusammensetzung Muskovit in einer Menge von wenigstens 60 Masse-% bezogen auf die Gesamtmasse des Muskovit-angereicherten Minerals umfasst.

3. Verfahren gemäß einem der Ansprüche 1-2, wobei das Muskovit-angereicherte Mineral eine Partikelgröße D₁₀ aufweist, die wenigstens größer als 5 µm ist.

4. Verfahren gemäß einem der Ansprüche 1-3, wobei das Muskovit-angereicherte Mineral eine Partikelgröße D₉₀ aufweist, die nicht größer als 2.000 µm ist.

5. Verfahren gemäß einem der Ansprüche 1-4, wobei das Muskovit-angereicherte Mineral Cäsium mit einer K_{d}([Cs]_{fest}/[Cs]_{wässrig}), die größer als 1.000 l/kg ist, absorbiert.

6. Verfahren gemäß einem der Ansprüche 1-5, wobei die Schwermetallatome Cs, Pb, Sr, Rb, Ba oder ein Gemisch davon umfassen.

7. Verfahren gemäß einem der Ansprüche 1-6, wobei die Schwermetallatome ¹³⁷Cs umfassen.

8. Verfahren gemäß einem der Ansprüche 1-7, wobei der kontaminierte Bereich ¹³⁷Cs in einer Menge von wenigstens 500 kBq/m² umfasst.

9. Verfahren gemäß einem der Ansprüche 1-8, umfassend Inkontaktbringen des kontaminierten Bereichs mit einem durchlässigen Behälter, der die Muskovit-angereicherte Mineralzusammensetzung umfasst.

10. Baumaterial, umfassend eine Muskovit-angereicherte Mineralzusammensetzung, wobei der Muskovit Kalium in einer Menge von nicht mehr als 10 Masse-% Kalium bezogen auf die Gesamtmasse des Muskovits umfasst,
**dadurch gekennzeichnet, dass** die Muskovit-angereicherte Zusammensetzung ferner Quarz- und Kaolingruppen-Mineral umfasst.

11. Verfahren gemäß einem der Ansprüche 1-9 oder Baumaterial gemäß Anspruch 10, wobei das Kaolingruppen-Mineral Kaolinit umfasst.

12. Verfahren gemäß einem der Ansprüche 1-9 oder 11 oder Baumaterial gemäß Anspruch 10 oder Anspruch 11, wobei der kaliumarme Muskovit Kalium in einer Menge von nicht mehr als 8 Masse-% Kalium bezogen auf die Gesamtmasse des Muskovits umfasst.

13. Baumaterial gemäß einem der Ansprüche 10-12, wobei die Muskovit-angereicherte Mineralzusammensetzung Muskovit in einer Menge von wenigstens 60 Masse-% bezogen auf die Gesamtmasse des Muskovit-angereicherten Minerals umfasst.

14. Baumaterial gemäß einem der Ansprüche 10-13, wobei das Baumaterial die Muskovit-angereicherte Mineralzusammensetzung in einer Menge von nicht mehr als 20 Gew.-% bezogen auf die Gesamtmenge des Baumaterials umfasst.

15. Baumaterial gemäß einem der Ansprüche 10-14, wobei das Baumaterial eine Betonmischung ist, die ferner Zement, Sand und Aggregat umfasst.

## Revendications

1. Procédé de séquestration d'atomes de métaux lourds d'une zone contaminée, comprenant la mise en contact de la zone contaminée avec une composition minérale enrichie en muscovite, dans lequel la muscovite comprend du potassium en une quantité ne dépassant pas 10 % en masse de potassium par rapport à la masse totale de la muscovite,
**caractérisé en ce que** la composition enrichie en muscovite comprend également un minéral du groupe du quartz et du kaolin.

2. Procédé selon la revendication 1, dans lequel la composition minérale enrichie en muscovite comprend de la muscovite en une quantité d'au moins 60 % en masse par rapport à la masse totale du minéral enrichi en muscovite.

3. Procédé selon l'une quelconque des revendications 1-2, dans lequel le minéral enrichi en muscovite a une taille de particule D₁₀ qui est au moins supérieure à 5 µm.

4. Procédé selon l'une quelconque des revendications 1-3, dans lequel le minéral enrichi en muscovite a une taille de particule D₉₀ ne dépassant pas 2 000 µm.

5. Procédé selon l'une quelconque des revendications 1-4, dans lequel le minéral enrichi en muscovite absorbe le césium avec un K_{d}([Cs]_{solide}/[Cs]_{aqueux}) qui est supérieur à 1 000 L/kg.

6. Procédé selon l'une quelconque des revendications 1-5, dans lequel les atomes de métaux lourds comprennent Cs, Pb, Sr, Rb, Ba, ou un mélange correspondant.

7. Procédé selon l'une quelconque des revendications 1-6, dans lequel les atomes de métaux lourds comprennent ¹³⁷Cs .

8. Procédé selon l'une quelconque des revendications 1-7, dans lequel la zone contaminée comprend ¹³⁷Cs en une quantité d'au moins 500 kBq/m².

9. Procédé selon l'une quelconque des revendications 1-8, comprenant la mise en contact de la zone contaminée avec un récipient perméable comprenant la composition minérale enrichie en muscovite.

10. Matériau de construction comprenant une composition minérale enrichie en muscovite, dans lequel la muscovite comprend du potassium en une quantité non supérieure à 10 % en masse de potassium par rapport à la masse totale de la muscovite,
**caractérisé en ce que** la composition enrichie en muscovite comprend également un minéral du groupe du quartz et du kaolin.

11. Procédé selon l'une quelconque des revendications 1-9 ou matériau de construction selon la revendication 10, dans lequel le minéral du groupe du kaolin comprend la kaolinite.

12. Procédé selon l'une quelconque des revendications 1-9 ou 11, ou matériau de construction selon la revendication 10 ou la revendication 11, dans lequel la muscovite appauvrie en potassium comprend du potassium en une quantité non supérieure à 8 % en masse de potassium par rapport à la masse totale de la muscovite.

13. Matériau de construction selon l'une quelconque des revendications 10-12, dans lequel la composition minérale enrichie en muscovite comprend de la muscovite en une quantité d'au moins 60 % en masse par rapport à la masse totale du minéral enrichi en muscovite.

14. Matériau de construction selon l'une quelconque des revendications 10-13, dans lequel le matériau de construction comprend la composition minérale enrichie en muscovite en une quantité non supérieure à 20 % en poids par rapport au poids total du matériau de construction.

15. Matériau de construction selon l'une quelconque des revendications 10-14, dans lequel le matériau de construction est un mélange pour béton comprenant en outre du ciment, du sable et des agrégats.
